# EUROPEAN PATENT SPECIFICATION

(11) **EP 2 353 905 B1**
(45) Date of publication and mention of the grant of the patent: **06.01.2016**
(21) Application number: 10151757.1
(22) Date of filing: 27.01.2010
(51) Int. Cl.: B60J 7/04

(54) **Open roof construction for a vehicle**
Öffenbare Dachkonstruktion für ein Fahrzeug
Construction décapotable pour véhicule

(43) Date of publication of application: 10.08.2011
(73) Proprietor: Inalfa Roof Systems Group B.V., 5804 AB Venray (NL)
(72) Inventor: Luijpers, Robertus Wilhelmus Henricus, 5801 JJ Venray (NL); Manders, Peter Christiaan Leonardus Johannes, 5961 GN Horst (NL); Nellen, Marcel Johan Christiaan, 5815 AR Merselo (NL)
(74) Representative: Voncken, Bartholomeus Maria Ch.

(56) References cited:
- EP-A1- 1 236 601
- EP-A1- 1 625 960
- EP-A2- 1 564 051
- DE-A1- 3 906 866
- DE-A1- 4 229 867
- DE-A1- 10 218 387
- DE-A1- 10 237 543
- DE-A1-102005 007 031
- JP-A- 59 143 719
- JP-A- 61 018 517
- US-A1- 2005 110 304

## Description

The invention relates to an open roof construction for a vehicle, comprising a roof opening in a stationary roof part of the vehicle and a roof panel which is movable along at least one longitudinally extending guide for selectively opening and closing said roof opening, which guide is positioned inwardly from longitudinal outer edges of the roof opening and is adapted for guiding a cable driven moving mechanism cooperating with the roof panel.

Such an open roof construction is known from DE-A-42 29 867. This known open roof construction provides two drive cables for driving two slides moving in the respective two guides.

It is an object of the present invention to provide an improved open roof construction of this type.

Thus, in accordance with the present invention, the open roof construction is characterized by two parallel guides each adapted for guiding a respective cable driven moving mechanism cooperating with the roof panel, which guides are spaced apart for there between receiving a single drive cable and wherein both moving mechanisms are interconnected by a brace which is driven in parallel to said guides by said single drive cable.

Because both moving mechanisms now are driven by a single, common drive cable advantages are obtained with respect of the tolerances and stability of the guiding of the roof panel.

In a preferred embodiment of the open roof construction the drive cable is positioned centrally between the guides. As a result the forces acting on the brace are well-balanced resulting in a minimal chance of the moving mechanisms getting jammed in the guides.

However, it is possible too that the drive cable is positioned eccentrically between the guides. Such an embodiment allows an electric drive motor for the drive cable to be positioned centrally, wherein the drive cable engages the eccentrically positioned circumference of a drive wheel of the drive motor.

Preferably the guides are integrated into a unitary guide member. That means that the guides are combined into a single part which offers advantages with respect to the ease of production as well as with respect to the final tolerances obtained.

It is possible then that the drive cable is positioned in a drive cable channel provided in the unitary guide member. Such a drive cable channel then also can be an integral part of the unitary member (further simplifying the production), but also may be a separate part attached thereto in any convenient manner (offering, for example, the possibility to make the cable channel from a different material, e.g. a self-lubricating material).

Because, according to the present invention, the roof panel is supported by the moving mechanisms at some distance inward from its longitudinal edges, the stability of the roof panel may be somewhat compromised in its open position compared to an open roof construction in which the moving mechanisms engage the roof panel closer to its outer longitudinal edges. Therefore, in an embodiment of the open roof construction according to the present invention, stabilising members are provided for stabilising the roof panel in its open position.

There are several possibilities for providing these stabilising members. Some non-limiting examples are: the stabilising members comprise projections and recesses provided at the frontal corners of the roof panel and at the rearward corners of the roof opening cooperating with each other in the open position of the roof panel; the stabilising members comprise pivot arms positioned near to the rear edge of the roof opening and spring loaded for pivoting in a direction for engaging the roof panel when latter is in its open position; the stabilising members are realised by seal members provided between the corresponding edges of the roof opening and roof panel, such that the seal members engage the roof panel when latter is in its open position; or the stabilising members comprise guide rails extending along at least part of the longitudinal edges of the roof opening and guide shoes provided at the forward part of the roof panel cooperating with said guide rails.

Hereinafter the invention will be elucidated while referring to the drawings in which:
Figure 1 shows an exploded view of parts of an embodiment of the open roof construction according to the invention;
Figure 2 shows on a larger scale a detail of figure 1;
Figure 3 shows, schematically, a partial frontal view;
Figure 4 shows, schematically, an alternative partial frontal view, and
Figures 5-8 show, schematically, examples of stabilising members which are not part of the invention.

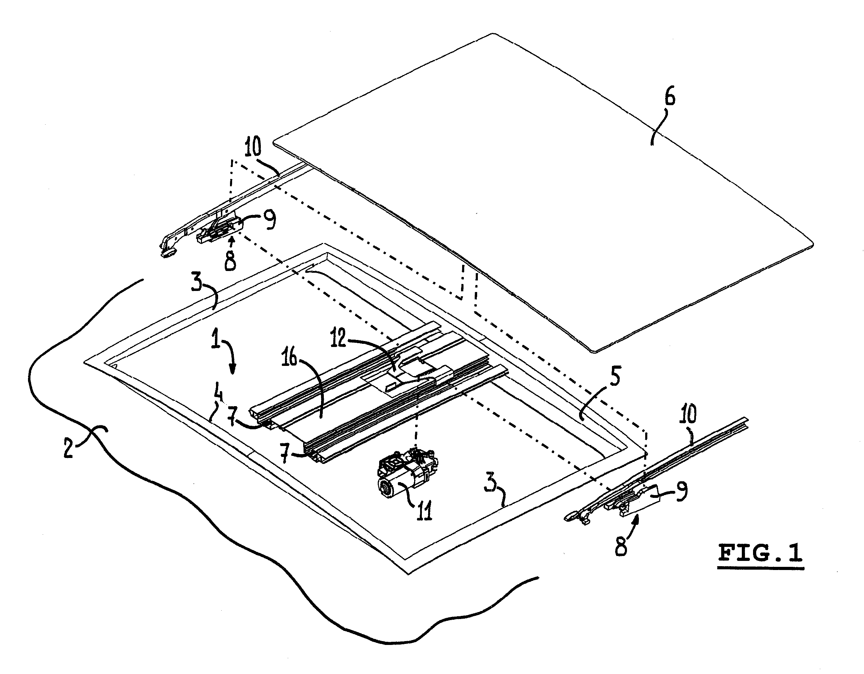

Firstly referring to figure 1 an open roof construction for a vehicle is shown in part and in an exploded position. A roof opening 1 is provided in a stationary roof part 2 of the vehicle. The roof opening comprises two longitudinal edges 3 (extending in the longitudinal direction of the vehicle) and a forward edge 4 and rearward edge 5.

A roof panel 6 is provided which is movable along two stationary longitudinally extending parallel guides 7 for selectively opening and closing the roof opening 1. The guides 7 are positioned inwardly from the longitudinal outer edges 3 of the roof opening 1 and (in a manner not illustrated) connect to the forward edge 4 and rearward edge 5 of the roof opening 1. Each guide 7 is adapted for guiding a cable driven moving mechanism 8 (for example comprising, among others, slides 9 and tilting levers 10) cooperating with the roof panel 6 in a manner known per se in the field of open roof constructions for offering the roof panel the desired succession of movements (e.g. sliding and tilting).

Figure 1 further shows an electric motor 11 used for driving the moving mechanisms 8.

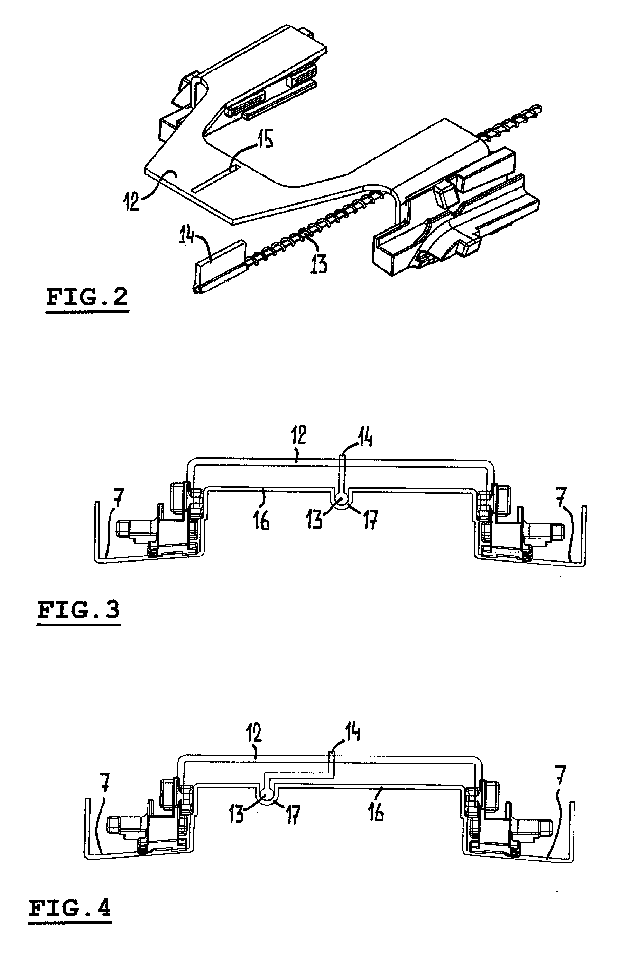

The moving mechanisms 8 are interconnected by a brace 12. As illustrated for example in figure 2 said brace 12 is driven in parallel to said guides 7 by a single drive cable 13 (which in the present case is provided with a plate 14 for engaging a slot 15 of the brace 12). The lateral ends of the brace 12 are shaped in a manner for at one hand sliding in the guides 7 and at the other hand operating the moving mechanisms 8 (such a shape being known from the state of the art and thus not being detailed further here).

In the embodiment illustrated in figure 3 the drive cable 13 is positioned centrally between the guides 7. In the embodiment illustrated in figure 4, however, the drive cable 13 is positioned eccentrically between the guides 7.

Referring to figures 1,3 and 4 it is shown that the guides 7 are integrated into a unitary guide member 16. This unitary guide member for example comprises a metal part (such as an extruded aluminium part) fabricated into the desired shape, or a plastic part moulded into the desired shape using any convenient technique. However, the unitary guide member 16 also may comprise an assembly of different materials combined into one single part.

Again referring to figures 3 and 4 it is illustrated that the drive cable 13 is positioned in a drive cable channel 17 provided in the unitary guide member 16. Although illustrated here as an integral part of the unitary guide member 16, the drive cable channel 17 also may comprise a separate part (e.g. made from a self-lubricating material) attached to the unitary guide manner in any appropriate manner (e.g. welding, gluing, riveting).

The unitary guide member 16 also may be used as a mounting member for the electric motor 11 for driving the drive cable 13.

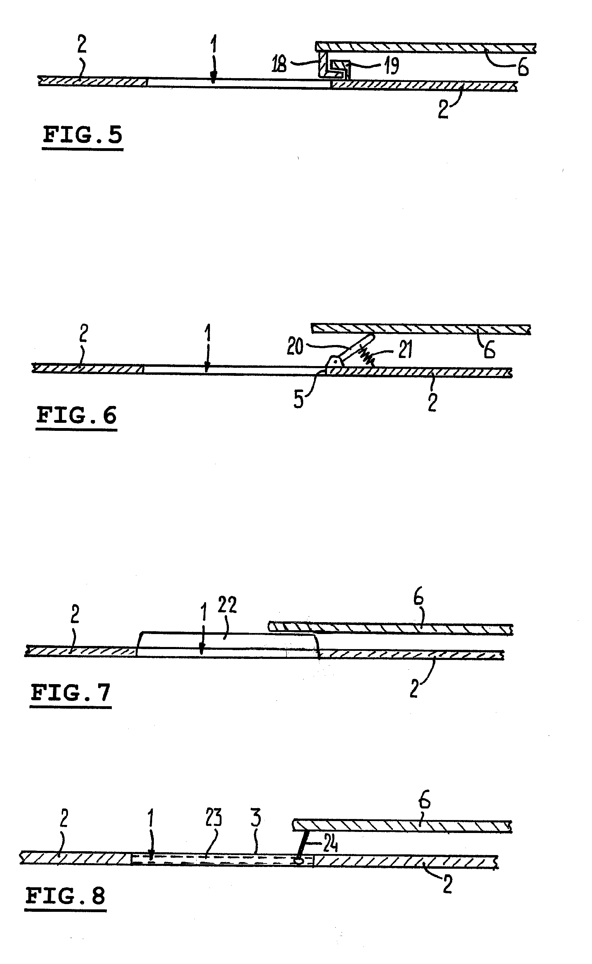

Figures 5-8 relate to stabilising members provided for stabilising the roof panel 6 in its open position, and are merely provided in an illustrative manner without showing all details of the open roof construction (for example, the guides and brace have been omitted).

Figure 5 shows an example in which the stabilising members comprise projections 18 and recesses 19 provided at the frontal corners of the roof panel 6 and at the rearward corners of the roof opening 1, respectively, cooperating with each other in the open position of the roof panel 6. These cooperating projections and recesses may come in many shapes and the number thereof may vary.

Figure 6 illustrates an example of the open roof construction wherein the stabilising members comprise pivot arms 20 positioned near to the rear edge 5 of the roof opening 1 and spring loaded 21 for pivoting in a direction for engaging the roof panel 6 when latter is in its open position. Although here a compression spring 21 is illustrated, also other spring means or a resilient arm 20 may be used. Further it is conceivable that such an arm is part of the roof panel and moves along therewith.

In the example according to figure 7 the stabilising members are realised by seal members 22 provided between the corresponding edges of the roof opening 1 and roof panel 6 (when closed), such that the seal members 22 engage the roof panel when latter is in its open position.

Finally figure 8 illustrates an example of the open roof construction according to the present invention, wherein the stabilising members comprise guide rails 23 extending along at least part of the longitudinal edges 3 of the roof opening 1 and guide shoes 24 provided at the forward part of the roof panel 6 cooperating with said guide rails 23.

The invention is not limited to the embodiments described before which may be varied widely within the scope of the invention as defined by the appending claims.

## Claims

1. Open roof construction for a vehicle, comprising a roof opening (1) in a stationary roof part (2) of the vehicle and a roof panel (6) which is movable along at least one longitudinally extending guide (7) for selectively opening and closing said roof opening, which guide (7) is positioned inwardly from longitudinal outer edges (3) of the roof opening and is adapted for guiding a cable driven moving mechanism (8) cooperating with the roof panel (6), **characterized by** two parallel guides (7) each adapted for guiding a respective cable driven moving mechanism (8) cooperating with the roof panel (6), which guides (7) are spaced apart for there between receiving a single drive cable (13) and wherein both moving mechanisms (8) are interconnected by a brace (12) which is driven in parallel to said guides (7) by said single drive cable (13).

2. Open roof construction according to claim 1, wherein the drive cable (13) is positioned centrally between the guides (7).

3. Open roof construction according to claim 1, wherein the drive cable (13) is positioned eccentrically between the guides (7).

4. Open roof construction according to any of the previous claims, wherein the guides (7) are integrated into a unitary guide member (16).

5. Open roof construction according to claim 4, wherein the drive cable (13) is positioned in a drive cable channel (17) provided in the unitary guide member (16).

## Patentansprüche

1. Offendachkonstruktion für ein Fahrzeug, aufweisend eine Dachöffnung (1) in einem stationären Dachteil (2) des Fahrzeugs und ein Dachpaneel (6), welches zum selektiven Öffnen und Schließen der Dachöffnung entlang wenigstens einer sich längserstreckenden Führung (7) bewegbar ist, welche Führung (7) von Längsaußenrändern (3) der Dachöffnung aus innen angeordnet ist und dazu eingerichtet ist, einen seilbetriebenen Bewegungsmechanismus (8), welcher mit dem Dachpaneel (6) zusammenwirkt, zu führen, **gekennzeichnet durch** zwei parallele Führungen (7), von welchen eine jede zum Führen eines jeweiligen seilbetriebenen Bewegungsmechanismus (8), welcher mit dem Dachpaneel (6) zusammenwirkt, eingerichtet ist, welche Führungen (7) voneinander im Abstand angeordnet sind, um ein einzelnes Antriebsseil (13) dazwischen aufzunehmen, und wobei beide Bewegungsmechanismen (8) **durch** ein Verstrebungselement (12) miteinander verbunden sind, welches parallel zu den Führungen (7) **durch** das einzelne Antriebsseil (13) angetrieben wird.

2. Offendachkonstruktion gemäß Anspruch 1, wobei das Antriebsseil (13) zentral zwischen den Führungen (7) angeordnet ist.

3. Offendachkonstruktion gemäß Anspruch 1, wobei das Antriebsseil (13) exzentrisch zwischen den Führungen (7) angeordnet ist.

4. Offendachkonstruktion gemäß irgendeinem der vorherigen Ansprüche, wobei die Führungen (7) in ein Einheitsführungselement (16) integriert sind.

5. Offendachkonstruktion gemäß Anspruch 4, wobei das Antriebsseil (13) in einem Antriebsseilkanal (17) angeordnet ist, welcher in dem Einheitsführungselement (16) bereitgestellt ist.

## Revendications

1. Construction de toit ouvrant pour un véhicule, comprenant une ouverture de toit (1) dans une partie de toit fixe (2) du véhicule et un panneau de toit (6) qui peut être déplacé le long d'au moins un guide s'étendant longitudinalement (7) pour ouvrir et fermer sélectivement ladite ouverture de toit, lequel guide (7) est positionné vers l'intérieur par rapport à des bords extérieurs longitudinaux (3) de l'ouverture de toit et est adapté pour guider un mécanisme mobile entraîné par câble (8) coopérant avec le panneau de toit (6), **caractérisé par** deux guides parallèles (7) adaptés chacun pour guider un mécanisme mobile entraîné par câble respectif (8) coopérant avec le panneau de toit (6), lesquels guides (7) sont espacés pour recevoir entre eux un seul câble d'entraînement (13) et où les deux mécanismes mobiles (8) sont reliés entre eux par une entretoise (12) qui est entraînée parallèlement auxdits guides (7) par ledit seul câble d'entraînement (13).

2. Construction de toit ouvrant selon la revendication 1, dans laquelle le câble d'entraînement (13) est positionné de manière centrale entre les guides (7).

3. Construction de toit ouvrant selon la revendication 1, dans laquelle le câble d'entraînement (13) est positionné de manière excentrique entre les guides (7).

4. Construction de toit ouvrant selon l'une des revendications précédentes, dans laquelle les guides (7) sont intégrés dans un élément de guide unitaire (16).

5. Construction de toit ouvrant selon la revendication 4, dans laquelle le câble d'entraînement (13) est positionné dans un canal de câble d'entraînement (17) prévu dans l'élément de guide unitaire (16).
